# DEMANDE DE BREVET EUROPEEN

(11) **EP 2 043 299 A1**
(43) Date de publication de la demande: **01.04.2009**
(21) Numéro de dépôt: 08305163.1
(22) Date de dépôt: 13.05.2008
(51) Int. Cl.: H04L 12/24

(54) **Systeme de mediation et de reaction intelligent pour la protection d'infrastructures Critiques et interdependantes**

(30) Priorité: 25.09.2007 US 995171 P
(71) Demandeur: Alcatel Lucent, 75008 Paris (FR)
(72) Inventeur: Ansiaux§, Arnaud, 91620, NOZAY (FR); Bulut, Evren, 91460, MARCOUSSIS (FR)
(74) Mandataire: Korakis-Ménager, Sophie

(57) **Abrégé**

Pour surveiller le fonctionnement de services d'une première infrastructure (IC1) dont dépend le fonctionnement de services critiques d'une deuxième infrastructure (IC2), un serveur (SS) apte à communiquer avec chacune des infrastructures reçoit, suite à la détection d'une défaillance d'un service de la première infrastructure par un premier terminal (TC1) inclus dans la première infrastructure, un identificateur (IdS) du service défaillant émis depuis le premier terminal. Le serveur transmet une requête au premier terminal afin de récupérer des valeurs de paramètres caractéristiques du service défaillant, et applique des règles de corrélation aux valeurs récupérées pour produire des informations pertinentes sur le fonctionnement du service défaillant. Le serveur transmet un message (MIP) contenant les informations produites à un deuxième terminal (TC2) inclus dans la deuxième infrastructure (IC2) afin que cette dernière puisse réagir à la défaillance du service de la première infrastructure.

## Description

La présente invention concerne une surveillance du fonctionnement de services qui sont délivrés par une infrastructure critique et dont dépend le fonctionnement de services d'une autre infrastructure critique, une infrastructure critique étant nécessaire à la vie quotidienne et à l'activité économique d'une communauté, telle qu'un réseau d'électricité, un réseau de télécommunications, un réseau bancaire, etc.

Le fonctionnement normal d'une communauté, telle qu'un pays industrialisé, dépend grandement de la qualité de services essentiels fournis par des infrastructures critiques, tels que des services de fourniture d'énergie, de télécommunications, de transport, de distribution d'eau par exemple.

Ces infrastructures critiques présentent de nouvelles vulnérabilités en raison notamment de leur complexité croissante, de leur haut degré de contrôle automatique et de leur interdépendance. Les interconnexions entre les infrastructures peuvent être des moyens physiques de propagation d'événements survenus dans une infrastructure vers une autre infrastructure. Une défaillance survenant dans une infrastructure peut engendrer des effets néfastes en cascade à d'autres infrastructures, et créer d'autres défaillances plus dangereuses dans certaines infrastructures. En effet, en raison du fort couplage entre les différentes infrastructures, des perturbations, des défaillances ou même des destructions d'une partie d'infrastructure peuvent engendrer des incidents inacceptables, voire vitaux.

Dans de tels cas, une compréhension insuffisante des interdépendances entre les infrastructures critiques augmente le temps de réaction et de rétablissement de services, et empêche parfois d'identifier les vulnérabilités et d'anticiper les risques. En particulier, des erreurs et des problèmes de coordination sont souvent produites dans des situations de crise en raison de la nécessité de prendre rapidement des décisions dans des conditions stressantes avec une multitude d'informations peu fiables et peu cohérentes. Une mauvaise compréhension et une maîtrise insuffisante d'une infrastructure, couplées à des erreurs humaines, peuvent influer considérablement la prise de décision en situation de crise.

Actuellement, les solutions traditionnelles pour faire face à une situation de crise dans une infrastructure consistent principalement à définir des recommandations sans réel formalisme, à élaborer un plan de continuité d'activités BCP (« Business Continuity Plan » en anglais) et des contrats sur des accords de qualité de service SLA (« Service Level Agreement » en anglais), à utiliser des techniques basiques de modélisation et de simulation d'interdépendance entre les infrastructures, et à utiliser des moyens de communication classiques, tels que le téléphone, la télécopie ou la messagerie électronique.

Le plan de continuité d'activité BCP définit pour une infrastructure un ensemble de procédures et d'actions pour rétablir un fonctionnement acceptable d'un service essentiel défaillant. Le plan BCP nécessite le maintient, le déploiement et la validation de son contenu régulièrement et ces opérations requièrent de nombreuses ressources. Par ailleurs, le plan BCP n'est pas toujours actualisé par rapport à de nouvelles menaces.

Un accord de qualité de service SLA est un support légal pour fixer une qualité minimale de service qu'une infrastructure délivrant le service doit atteindre. Des outils de gestion de qualité de service SLM (« Service Level Management » en anglais) ont seulement pour rôle de contrôler la qualité des services délivrés par l'infrastructure. Un accord SLA et les outils SLM ont pour inconvénient qu'il existe un manque de transparence et de communication efficace entre les infrastructures interdépendantes. Une infrastructure dépendante d'une autre infrastructure n'a pas de capacité ni d'informations pertinentes pour anticiper efficacement des mesures de sauvegarde lorsqu'une défaillance de service survient dans ladite autre infrastructure. L'infrastructure reçoit seulement des rapports insuffisants basés sur des métriques définies dans l'accord SLA et générées par les outils SLM.

Par conséquent, le plan de continuité d'activité BCP et l'accord de qualité de service SLA fournissent seulement des réponses statiques inefficaces contre des situations critiques qui requièrent une forte réactivité.

D'autres solutions consistent à modéliser l'interdépendance entre les infrastructures critiques et à élaborer des techniques de simulation afin d'analyser les impacts d'interruptions de service délivrés par des infrastructures et éventuellement d'anticiper ces interruptions. Ces solutions ont l'inconvénient d'être très complexes, en raison de la complexité intrinsèque de chaque infrastructure et de la présence de plusieurs interconnexions physiques et logiques entre les infrastructures, ce qui rend très difficile la prédiction du comportement des infrastructures. De plus, ces modélisations et simulations sont basées pour la plupart sur des informations qualitatives, puisqu'une approche quantitative requiert une récupération de données concernant l'infrastructure. Or ces données ne sont pas toujours accessibles, si elles sont sensibles ou confidentielles, les modélisations sont donc insuffisantes pour représenter la vulnérabilité réelle des infrastructures.

Par conséquent, il n'existe pas de système centralisé pour superviser les infrastructures critiques interdépendantes, c'est-à-dire des infrastructures critiques qui ont des services critiques dépendant du fonctionnement d'un ou de plusieurs services fournis par une ou plusieurs autres infrastructures. Il n'existe pas de système ayant des capacités pour gérer cette interdépendance de manière continue et en temps réel et pour faciliter une gestion de crise en cas de défaillance dans une infrastructure.

Un objectif de l'invention est de remédier aux inconvénients précédents en évitant ou minimisant les impacts néfastes d'une défaillance dans une infrastructure critique vers d'autres infrastructures critiques interdépendantes.

Pour atteindre cet objectif, un procédé selon l'invention pour surveiller le fonctionnement de services d'une première infrastructure dont dépend le fonctionnement de services critiques d'une deuxième infrastructure, est caractérisé en ce qu'il comprend les étapes suivantes dans un serveur apte à communiquer avec chacune des infrastructures :
suite à la détection d'une défaillance d'un service de la première infrastructure par un premier terminal inclus dans la première infrastructure, une réception d'un identificateur du service défaillant émis depuis le premier terminal,
une transmission d'une requête au premier terminal afin de récupérer des valeurs de paramètres caractéristiques du service défaillant,
une application de règles de corrélation aux valeurs récupérées pour produire des informations relatives à l'état du service défaillant, et
une transmission d'un message contenant les informations produites à un deuxième terminal inclus dans la deuxième infrastructure.

L'invention offre de nouvelles capacités pour prendre une décision adéquate au meilleur moment en situation de crise. Une interface de communication commune et un protocole de communication spécifique entre les infrastructures hétérogènes sont proposés afin de fournir des informations sur l'état de fonctionnement réel d'une infrastructure présentant une défaillance. Ces informations sont incluses dans ledit message transmis en temps utile, c'est-à-dire ni trop tôt, ni trop tard pour prendre une décision adéquate. Le message est transmis à un instant considéré le plus opportun en fonction d'informations prédéterminées disponibles et de différents temps de réaction depuis les infrastructures interdépendantes.

Avantageusement, l'invention accroît la fiabilité générale et la réactivité entre les infrastructures, qui peuvent être des infrastructures critiques. Le message offre à toute infrastructure dépendante d'une autre infrastructure une meilleure vue opérationnelle et en temps réel de ladite autre infrastructure et du comportement de cette dernière face à des situations critiques.

L'invention fournit un moyen proactif, efficace et fiable pour gérer une continuité d'activité dans le cas d'une défaillance de service d'une infrastructure en agissant comme une interface de protection entre les infrastructures et en établissant une communication de médiation efficace et adéquate avant, pendant et après la défaillance de service. Avec une surveillance globale en temps réel, les risques de défaillance peuvent être anticipés et les temps de réaction sont diminués, afin d'éviter ou de minimiser les effets néfastes d'une défaillance, ce qui limite par ailleurs les coûts liés à la gestion de la défaillance.

Dès lors que le premier message est parti, de nouveaux messages pourront être générés et envoyés au fur et à mesure que des nouvelles valeurs sont récupérées.

Selon une autre caractéristique de l'invention, le message peut être transmis à un instant déterminé en fonction de valeurs de paramètres temporels d'un service critique de la deuxième infrastructure dépendant du service défaillant.

Selon une autre caractéristique de l'invention, le message peut être transmis à un instant déterminé en outre en fonction de valeurs de paramètres caractéristiques du service défaillant.

Le message peut être généré puis actualisé jusqu'à ledit instant déterminé avant d'être transmis à la deuxième infrastructure, et d'autres messages peuvent être ensuite être générés et transmis au fur et à mesure que d'autres valeurs de paramètres caractéristiques du service défaillant sont récupérées. A cette fin, le procédé selon l'invention peut comprendre en outre :
une récupération de valeurs d'autres paramètres caractéristiques du service défaillant,
une application de règles de corrélation aux valeurs récupérées pour produire d'autres informations relatives à l'état du service défaillant, et
une transmission d'un autre message contenant les informations produites au deuxième terminal inclus dans la deuxième infrastructure.

Selon une autre caractéristique de l'invention, le procédé peut comprendre en outre une transmission d'un message d'alerte au deuxième terminal si une valeur de paramètre caractéristique est en dehors d'une plage de valeurs prédéterminée.

Selon une autre caractéristique de l'invention, le procédé peut comprendre en outre :
une génération d'une matrice de dépendance entre des services critiques de la deuxième infrastructure et des services de la première infrastructure,
une association de paramètres temporels à chacun desdits services critiques de la deuxième infrastructure,
une définition de paramètres caractéristiques de chaque service de la première infrastructure dont dépend un service critique de la deuxième infrastructure,
une définition de règles de corrélation pour combiner des valeurs de paramètres caractéristiques d'un service défaillant, et
une mémorisation de la matrice de dépendance, des paramètres temporels, des paramètres caractéristiques et des règles de corrélation dans une base de données liée au serveur.

Les règles de corrélation mémorisées dans la base de données représentent un lien établi entre le plan de continuité d'activité BCP et un accord de qualité de service SLA. Ces règles servent à déclencher des premières actions en réponse à une défaillance détectée et à générer des messages de protection pour les opérateurs des infrastructures qui peuvent ensuite prendre des décisions plus élaborées et adaptées.

L'invention accroît le sentiment de sécurité, de fiabilité et de disponibilité d'une infrastructure et consolide la confiance entre les opérateurs des infrastructures.

Selon une autre caractéristique de l'invention, le message peut contenir un délai pour récupérer des valeurs d'autres paramètres caractéristiques.

L'invention concerne également un serveur pour surveiller le fonctionnement de services d'une première infrastructure dont dépend le fonctionnement de services critiques d'une deuxième infrastructure, le serveur étant apte à communiquer avec chacune des infrastructures, caractérisé en ce qu'il comprend :
des moyens pour recevoir, suite à la détection d'une défaillance d'un service de la première infrastructure par un premier terminal inclus dans la première infrastructure, un identificateur du service défaillant émis depuis le premier terminal,
des moyens pour transmettre une requête au premier terminal afin de récupérer des valeurs de paramètres caractéristiques du service défaillant,
des moyens pour appliquer des règles de corrélation aux valeurs récupérées pour produire des informations relatives à l'état du service défaillant, et
des moyens pour transmettre un message contenant les informations produites à un deuxième terminal inclus dans la deuxième infrastructure.

La présente invention et les avantages qu'elle procure seront mieux compris au vu de la description ci-après faite en référence aux figures annexées, dans lesquelles :
- la figure 1 est un bloc-diagramme schématique d'un système de surveillance de deux infrastructures critiques interdépendantes selon l'invention ; et
- la figure 2 est un algorithme d'un procédé de surveillance de deux infrastructures critiques interdépendantes selon l'invention.

Préalablement, quelques termes et concepts utiles à la compréhension de l'invention sont définis ci-après.

Une infrastructure est un ensemble d'éléments structuraux interconnectés qui fournissent le cadre pour supporter la totalité de la structure. Une infrastructure critique correspond à une installation de base nécessaire à la vie quotidienne et à l'activité économique d'une communauté telle qu'un Etat. Des infrastructures critiques sont par exemple relatives à un réseau de télécommunication, à un réseau d'électricité, à un réseau de transport, à un réseau bancaire, ou encore un réseau de services d'urgence.

Il est considéré qu'une défaillance d'une infrastructure critique peut conduire à la déstabilisation du bon fonctionnement économique de la communauté. Par exemple, une défaillance est une panne ou bien un incident tel qu'un attentat dans l'infrastructure critique.

Par exemple, une panne dans le réseau d'électricité peut déstabiliser le fonctionnement le réseau de télécommunication, ce qui rend indisponibles les services d'urgence.

Chaque infrastructure critique offre des services critiques à la communauté. Un service est dit critique par exemple s'il est indispensable au bon fonctionnement de l'infrastructure critique ou si sa délivrance est une clause de garantie de qualité assurée par l'infrastructure critique. Par ailleurs, chaque infrastructure délivre au moins un service à au moins une autre infrastructure critique dépendante, le service délivré par ladite infrastructure critique pouvant être nécessaire au fonctionnement d'un service critique de ladite autre infrastructure critique dépendante.

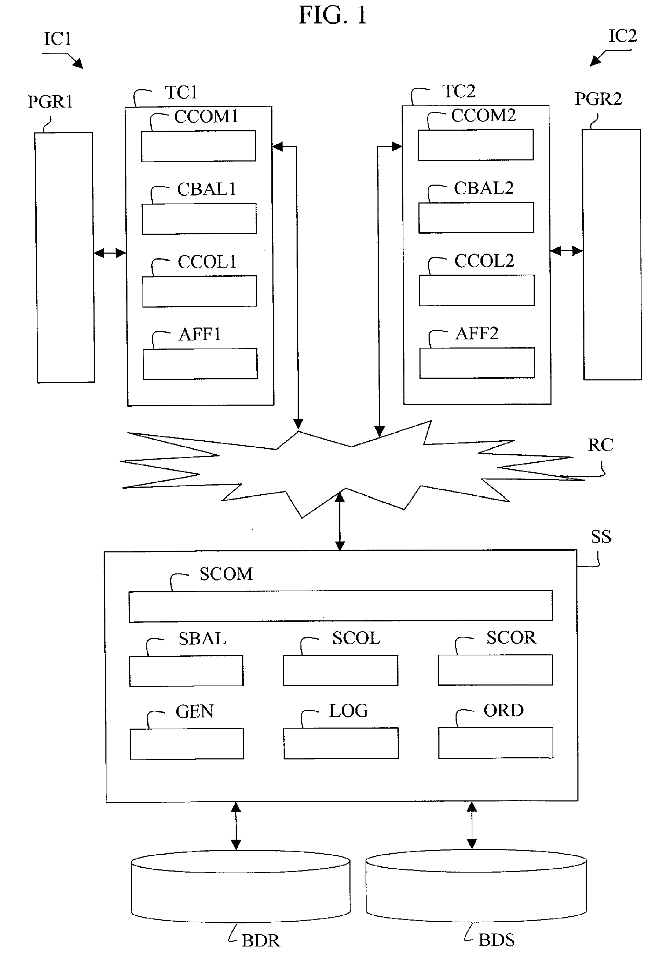

En référence à la figure 1, un système de surveillance selon une réalisation de l'invention comprend un réseau de communication RC, un serveur de sécurité SS et au moins des premier et deuxième terminaux clients TC1 et TC2 intégrés respectivement dans des première et deuxième infrastructures critiques IC1 et IC2.

Le réseau de communication RC relie le serveur de sécurité SS et les deux terminaux clients TC1 et TC2 par des liaisons filaires ou sans fil. Par exemple, le réseau de communication RC est un réseau de paquets de type IP avec liaison filaire, ou bien est un réseau de radiocommunication. Le réseau de communication RC peut être restreint à une simple liaison entre le serveur de sécurité SS et chaque terminal client. Il est considéré que le réseau de communication RC est une entité indépendante et spécifique aux infrastructures sous la surveillance du serveur de sécurité.

Dans la suite de la description, le serveur de sécurité SS est une entité externe aux infrastructures et est relié à deux terminaux clients TC1 et TC2 respectivement associés aux première et deuxième infrastructures critiques distinctes, la deuxième infrastructure IC2 étant dépendante de la première infrastructure IC1.

En variante, le serveur de sécurité SS peut être inclus dans l'une des deux infrastructures.

Le serveur de sécurité SS comprend un module serveur de communication SCOM, un module serveur de balayage de service SBAL, un module serveur de collection SCOL, un module de corrélation COR, un module de génération de message GEN, un module d'historique LOG et un module d'ordonnancement temporel ORD.

Le serveur de sécurité SS est lié à une base de données de règles BDR et à une base de données de stockage BDS, qui sont chacune intégrée dans ce dernier ou incorporée dans un serveur de gestion de base de données relié au serveur SS par une liaison locale ou distante.

La base de données de règles BDR comprend des informations relatives à l'invention, telles que des règles de corrélation pour la génération de messages à transmettre à une infrastructure critique. La base de données de stockage BDS comprend des fichiers dans lesquels sont mémorisés des événements relatifs au traitement d'une défaillance d'un service d'une infrastructure.

Dans la suite de la description en référence à la figure 1, le terminal client désigne indifféremment les deux terminaux clients TC1 et TC2 et des références avec l'extension "1" correspondent au premier terminal client TC1 tandis que des références avec l'extension "2" correspondent au deuxième terminal client TC2.

Le terminal client TC1, TC2 comprend un module client de communication CCOM1, CCOM2, un module client de balayage de service CBAL1, CBAL2 un module client de collection CCOL1, CCOL2 et un module d'affichage de message AFF1, AFF2. Le terminal client TC1, TC2 est relié à une plateforme de gestion de réseau PGR1, PGR2 qui gère le fonctionnement et la fourniture de services de l'infrastructure critique.

Il est considéré que le serveur de surveillance SS communique dans un premier temps avec le premier terminal client TC1 pour surveiller la première infrastructure et communique dans un deuxième temps avec le deuxième terminal client TC2 pour alerter la deuxième infrastructure.

Le module serveur de communication SCOM assure une communication sécurisée avec le module client de communication CCOM1, CCOM2. Ladite communication sécurisée peut être filaire ou sans fil.

Le module serveur de balayage de service SBAL récupère tous les identificateurs des services à balayer depuis la base de donnée de règles BDR lors du démarrage du système de surveillance et transmet ces derniers au module client de balayage de service CBAL1 de la première infrastructure. Le module SBAL est ensuite à l'écoute permanente ou régulière du module client CBAL1. Lorsqu'une défaillance de service est détectée par le module client CBAL1, le module serveur SBAL reçoit un identificateur du service défaillant. Le module serveur SBAL active le module serveur de collection SCOL, le module d'historique LOG et le module d'ordonnancement temporel ORD pour traiter le service identifié.

Le module serveur de collection SCOL récupère tous les paramètres du service défaillant depuis la base de donnée de règles BDR en fonction de l'identificateur du service défaillant. Le module SCOL transmet des requêtes au module client de collection CCOL1 pour obtenir les valeurs de ces paramètres. Dès que toutes les valeurs sont récupérées, le module SCOL transmet ces dernières au module de corrélation COR.

Le module de corrélation COR établit une corrélation entre toutes les valeurs récupérées en fonction de règles mémorisées dans la base de donnée de règles BDR. Le module COR transmet au module de génération de message GEN tous les détails pertinents sur les paramètres ou des informations enrichies cohérentes pour une génération d'un message intelligent de protection.

Le module de génération de message GEN génère un message intelligent de protection en fonction des informations reçues depuis le module de corrélation COR et transmet ce message au module d'affichage de message AFF2 de la deuxième infrastructure.

Le module d'historique LOG écrit toutes les informations d'historique dans la base de données de stockage BDS concernant la période entre le début et la fin d'une défaillance d'un service. Par ailleurs, toutes les informations d'échange, telles que des valeurs de paramètre et des messages de protection, sont mémorisées sous un format structuré dans la base de donnée BDS.

Le module d'ordonnancement temporel ORD détermine le meilleur moment pour la transmission de messages intelligents de protection et de messages urgents au module d'affichage de message AFF2, en fonction de différentes valeurs de temps liées aux services critiques et aux services balayés et en fonction de seuils prédéfinis. Le module ORD régule les transmissions des différents messages pendant le temps pour résoudre la défaillance du service. En outre, le module ORD peut vérifier un délai pour obtenir de valeurs de paramètre depuis le module client de collection CCOL1.

Les modules du terminal client TC1 ont de fonctionnalités complémentaires des modules du serveur de sécurité SS.

Le module client de communication CCOM1, CCOM2 assure une communication sécurisée avec le module serveur de communication SCOM.

Le module client de balayage de service CBAL1, CBAL2 vérifie continuellement ou régulièrement l'état de tous les services dont dépend un service critique à partir de la plateforme de gestion de réseau PGR1, PGR2. Lorsqu'une défaillance de service est détectée, le module client de balayage de service alerte le module serveur de balayage de service SBAL.

Le module client de collection CCOL1, CCOL2 reçoit des requêtes émises depuis le module serveur de collection SCOL pour récupérer toutes les valeurs disponibles des paramètres du service défaillant. La récupération de valeurs est initiée par le module serveur SCOL qui reçoit depuis le module client de collection les informations requises sur les services à balayer.

Le module d'affichage de message AFF1, AFF2 reçoit le message intelligent de protection dans un format spécifique au système de surveillance et transforme le message dans un format interprétable par la plateforme de gestion de réseau PGR1, PGR2.

En variante, les différents modules clients sont répartis dans plusieurs terminaux communiquant entre eux dans une même infrastructure.

Il sera entendu que les interactions entre le serveur de service SS et les terminaux clients TC1 et TC2 sont symétriques, le serveur SS pouvant surveiller la deuxième infrastructure et alerter la première infrastructure de toute défaillance de service détectée dans la deuxième infrastructure.

Il sera également entendu que le serveur de service SS selon l'invention peut surveiller le fonctionnement de services de plusieurs infrastructures critiques, et notamment le fonctionnement de services d'une infrastructure critique dont dépendent plusieurs autres infrastructures critiques.

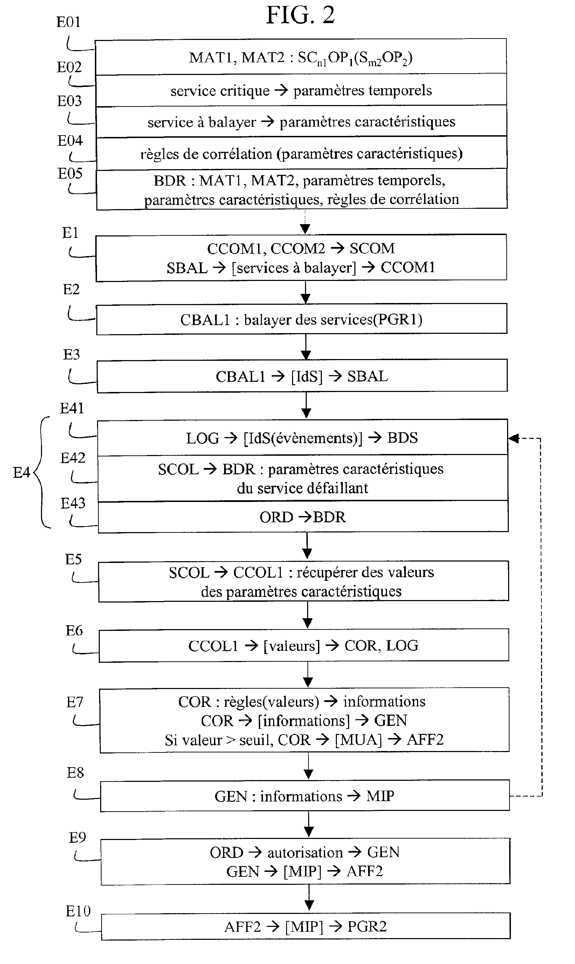

En référence à la figure 2, le procédé de surveillance selon une réalisation de l'invention comprend des étapes E1 à E10, exécutées automatiquement dans le système de surveillance selon l'invention, précédées d'étapes préliminaires E01 à E05.

Le procédé est décrit ci-après par rapport à un serveur de surveillance qui est en communication avec des première et deuxième infrastructures critiques interdépendantes et qui contrôle l'état de fonctionnement de la première infrastructure afin d'alerter la deuxième infrastructure de toute défaillance détectée dans la première infrastructure.

Les étapes préliminaires E01 à E05 correspondent à une collaboration entre des opérateurs des première et deuxième infrastructures afin de générer et de fixer de règles par exemple en partant d'un contrat SLA sur des accords de qualité de service, d'un plan de continuité d'activité BCP et une évaluation des risques. Ces règles sont définies dans des tables et des matrices mémorisées dans la base de données de règles BDR. Un opérateur d'une infrastructure est considéré comme une société en charge d'assurer le fonctionnement de l'infrastructure.

Les opérateurs des première et deuxième infrastructures sont respectivement désignés par « premier opérateur » OP₁ et « deuxième opérateur » OP₂. Chaque infrastructure délivre des services qui sont critiques ou non critiques. Il est supposé que les première et deuxième infrastructures disposent respectivement de M₁ services Sₘ₁OP₁, avec 1 ≤ m1 ≤ M₁, et de M₂ services Sₘ₂OP₂, avec 1 ≤ m2 ≤ M₂, et disposent respectivement de N₁ services critiques SCₙ₁OP₁, avec 1 ≤ n1 ≤ N₁, et de N₂ services critiques SCₙ₂OP₂, avec 1 ≤ n2 ≤ N₂.

A l'étape préliminaire E01, l'opérateur de la première infrastructure critique IC1, respectivement de la deuxième infrastructure critique IC2, définit une relation de dépendance de chaque service critique de l'infrastructure avec des services, critiques ou non critiques, de la deuxième infrastructure, respectivement de la première infrastructure. Les services de la deuxième infrastructure associés à un service critique sont nécessaires au bon fonctionnement du service critique et seront ensuite sous la surveillance des modules serveur et client de balayage. De tels services sont désignés dans la suite de la description par « services à balayer ».

Par exemple, cette relation de dépendance est définie suite à une analyse de risques aboutissant à la détermination de services critiques, de contre-mesures et de procédures d'urgence qui sont décrits dans plusieurs documents, dont le plan de continuité d'activité BCP par exemple.

L'opérateur génère alors une matrice qui décrit cette relation de dépendance précédemment définie. Par exemple, l'opérateur de la première infrastructure génère une matrice MAT1 de la forme suivante :

| MAT1 | | OP₂ | | | | |
|---|---|---|---|---|---|---|
| | | S₁OP₂ | ··· | Sₘ₂OP₂ | ··· | S_{M2}OP₂ |
| OP₁ | SC₁OP₁ | x | | | | x |
| | ··· | | | | | |
| | SCₙ₁OP₁ | x | | | | |
| | ··· | | | | | |
| | SC_{N1}OP₁ | x | | | | |

Le premier service critique SC₁OP₁ du premier opérateur OP₁ dépend des services S₁OP₂ et S_{M2}OP₂ du deuxième opérateur OP₂, tandis que le dernier service critique SC_{N1}OP₁ du premier opérateur OP₁ dépend seulement du service S₁OP₂ du deuxième opérateur OP₂.

Selon un autre exemple, l'opérateur de la deuxième infrastructure génère une matrice MAT2 de la forme suivante :

| MAT2 | | OP₁ | | | | |
|---|---|---|---|---|---|---|
| | | S₁OP₁ | ··· | Sₘ₁OP₁ | ··· | S_{M1}OP₁ |
| OP₂ | SC₁OP₂ | x | | | | |
| | ... | | | | | |
| | SCₙ₂OP₂ | | | | | x |
| | ... | | | | | |
| | SC_{N2}OP₂ | x | | | | x |

Le premier service critique SC₁OP₁ du premier opérateur OP₁ dépend seulement du dernier service S_{M1}OP₁ du deuxième opérateur OP₂.

Dans le cas où plusieurs infrastructures sont à surveiller, chaque opérateur d'une infrastructure définit une relation de dépendance de chaque service critique de l'infrastructure avec des services, critiques ou non critiques, de chacune des autres infrastructures dont dépend ladite infrastructure.

A l'étape E02, l'opérateur de chaque infrastructure IC1, IC2, associe à chaque service critique une liste de paramètres temporels qui permettent de déterminer le meilleur moment pour envoyer un message de protection vers une infrastructure. Chaque opérateur définit en outre des métriques et des seuils pour chacun des services critiques.

A titre d'exemples, un paramètre temporel est un délai au-delà duquel un seuil prédéfini peut être dépassé, ou bien est un intervalle de temps autorisé pendant lequel le service critique n'est pas rendu.

A l'étape E03, l'opérateur de chaque infrastructure IC1, IC2, définit des paramètres caractéristiques de chaque service à balayer. Ces paramètres caractéristiques sont définis de manière à être dépendants les uns des autres et à effectuer des corrélations entre des valeurs de ces paramètres et peuvent être relatifs à des données temporelles. Ces corrélations ont pour but de fournir des informations enrichies cohérentes en cas de défaillance du service à balayer qui permettent à l'infrastructure dépendante du service défaillant de réagir avec un maximum d'informations pertinentes sur l'état de fonctionnement réel du service défaillant.

Par exemple, un paramètre caractéristique est aussi un délai au-delà duquel un seuil prédéfini peut être dépassé.

Par ailleurs, un paramètre caractéristique peut être un délai pour récupérer des valeurs de certains paramètres.

Les paramètres temporels et caractéristiques de services ainsi que les seuils définis aux étapes E02 et E03 sont par exemple obtenus suite à l'établissement d'un contrat SLA sur des accords de qualité de service entre les opérateurs des première et deuxième infrastructures permettant la continuité et la disponibilité de leurs services interdépendants.

A l'étape E04, l'opérateur de chaque infrastructure définit une table de règles de corrélation qui combinent des valeurs de paramètres de différents services pour obtenir des informations enrichies cohérentes. Ces informations offrent une vue contextuelle de l'état de fonctionnement réel de l'infrastructure à surveiller.

A l'étape E05, les matrices de dépendance, les listes de paramètres temporels des services critiques, les paramètres caractéristiques des services à balayer et les tables de règles de corrélation sont transmises au serveur de surveillance qui les mémorise dans la base de données de règles BDR.

Les étapes préliminaires E01 à E05 sont exécutées de manière « hors-ligne », c'est-à-dire sans qu'il soit nécessaire de communiquer entre les terminaux clients et le serveur de surveillance. Par exemple, les opérateurs des infrastructures transmettent les tables de règles de corrélation à un administrateur du serveur de service qui intègre ces tables dans la base de données de règles BDR. A l'issue des étapes E01 à E05, le serveur de surveillance dispose dans la base de données de règles BDR de toutes les informations nécessaires à la surveillance des infrastructures.

Les étapes suivantes E1 à E10 sont alors exécutées de manière « en ligne », c'est-à-dire par le serveur de surveillance et chacun des terminaux clients qui communiquent avec le serveur de surveillance. Toutes les communications et transmissions de données entre l'un des terminaux clients et le serveur de surveillance sont assurées par le module client de communication du terminal client et le module serveur de communication du serveur de surveillance. Nous rappelons que le procédé est décrit ci-après pour une surveillance de l'état de fonctionnement de la première infrastructure afin d'alerter la deuxième infrastructure de toute défaillance détectée dans la première infrastructure.

A l'étape E1, les modules clients de communication CCOM1 et CCOM2 des terminaux clients TC1 et TC2 respectifs se connectent au module serveur de communication SCOM du serveur de surveillance SS. Le module serveur de balayage SBAL détermine une liste des services à balayer dans chaque infrastructure en fonction des informations mémorisées dans la base de données de règles BDR. Le module serveur de balayage SBAL transmet la liste d'identificateurs des services à balayer de la première infrastructure au module client CCOM1 et la liste des services à balayer de la deuxième infrastructure au module client CCOM2.

A l'étape E2, le module client de balayage CBAL1 du terminal client TC1 balaye continuellement ou régulièrement tous les services de la première infrastructure dont les identificateurs ont été transmis dans la liste par le module serveur SBAL. Par exemple, le module client CBAL1 effectue des analyses de fonctionnement d'un service à des points de détection de la première infrastructure via la plateforme de gestion de réseau PGR1.

A l'étape E3, lorsque le module client de balayage CBAL1 détecte une défaillance d'un service, le module CBAL1 transmet un identificateur IdS du service défaillant au module serveur de balayage SBAL.

A l'étape E4, les modules d'historique LOG, de collection SCOL et d'ordonnancement temporel ORD sont activés, par exemple par le module serveur de balayage SBAL, et exécutent des opérations de manière simultanée selon des sous-étapes E41 à E43.

A la sous-étape E41, le module d'historique LOG est à l'écoute de tous les événements qui sont liés à la défaillance du service détecté. Ces événements sont par exemple mémorisés dans un fichier dans la base de données de stockage BDS en association avec l'identificateur IdS du service défaillant.

A la sous-étape E42, le module serveur de collection SCOL interroge la base de données de règles BDR pour obtenir tous les paramètres caractéristiques du service défaillant, par exemple au moyen de l'identificateur IdS du service défaillant.

A la sous-étape E43, le module d'ordonnancement temporel ORD interroge la base de données de règles BDR pour obtenir toutes valeurs temporelles concernant des paramètres relatifs aux services critiques de la deuxième infrastructure et aux services à balayer de la première infrastructure. Le module ORD contient un algorithme pour déterminer le meilleur moment pour transmettre un premier message intelligent de protection MIP à la deuxième infrastructure. Par ailleurs, le module ORD débute la régulation de toutes transmissions de données entre le serveur de surveillance et chacun des terminaux clients.

A l'étape E5, le module serveur de collection SCOL transmet une requête au module client de collection CCOL1 qui, suite à la réception de la requête, récupère toutes les valeurs des paramètres caractéristiques du service défaillant en coopérant avec la plateforme de gestion de réseau PGR1 de la première infrastructure. La récupération de ces valeurs peut être effectuée de manière automatique ou manuelle, ou encore en partie de manière automatique et en partie de manière manuelle. Par exemple, la requête contient tous les paramètres caractéristiques du service défaillant obtenus à la sous-étape E42 et une commande pour que le module client CCOL1 renseigne ces paramètres caractéristiques.

A l'étape E6, le module client de collection CCOL1 transmet une réponse contenant toutes les valeurs récupérées au module serveur de collection SCOL qui retransmet ces dernières au module de corrélation COR ainsi qu'au module d'historique LOG.

A l'étape E7, le module de corrélation COR analyse les règles de corrélation mémorisées dans la base de données de règles BDR afin d'appliquer ces règles aux différents paramètres renseignés par les valeurs récupérées.

Le module de corrélation COR produit des informations enrichies cohérentes suite à une analyse des valeurs de paramètre en fonction de règles de corrélation. Le module de corrélation COR transmet ces informations produites au module de génération de message GEN.

Par ailleurs, le module de corrélation COR vérifie si des valeurs de paramètres respectent des seuils prédéfinis respectifs, si ces derniers existent. Si au moins une valeur de paramètre ne respecte pas un seuil respectif, le module de corrélation COR commande la transmission automatique d'un message urgent d'alerte MUA mémorisé dans la base de données de règles BDR vers le module d'affichage AFF2 de la deuxième infrastructure. De manière générale, le message d'alerte MUA est transmis si au moins une valeur de paramètre est en dehors d'une plage de valeurs prédéterminée. Le message urgent d'alerte MUA contient par exemple quelques informations de base sur la défaillance détectée, afin de prévenir au plus tôt la deuxième infrastructure de la défaillance détectée.

A l'étape E8, le module de génération de message GEN reçoit les informations produites par le module de corrélation COR et intègre ces dernières dans un message intelligent de protection MIP qui est dans un format interprétable par le terminal client TC2 de la deuxième infrastructure.

Les étapes E4 à E8 peuvent être répétées, sous le contrôle du module d'ordonnancement temporel ORD, jusqu'à ce que certains paramètres caractéristiques du service défaillants soient renseignés par le premier terminal client TC1.

A l'étape E9, le module de génération de message GEN est en attente d'une autorisation par le module pour transmettre toute donnée vers l'un des terminaux clients. Par exemple, le module ORD consulte les informations produites par le module GEN et détermine le meilleur moment pour la transmission du message MIP en fonction d'un algorithme prédéfini prenant en compte notamment des valeurs de paramètres temporels du service critique de la deuxième infrastructure. Le meilleur moment déterminé peut correspondre au moment où l'opérateur de la deuxième infrastructure peut prendre des décisions adéquates et en connaissance de cause pour anticiper les conséquences de la défaillance sur les services critiques délivrés par la deuxième infrastructure.

Le message MIP est actualisé régulièrement en fonction des valeurs de paramètres caractéristiques du service défaillant transmis au fur et à mesure par le premier terminal client, lors des étapes E4 à E8 qui sont éventuellement répétées. Le message MIP est conservé et actualisé jusqu'à l'expiration d'un délai critique qui correspond au meilleur moment pour la transmission du message MIP.

Par exemple, le délai critique est présent dans la base de données de règles BDR et correspond à un paramètre temporel associé au service critique défini à l'étape préliminaire E02. Selon un autre exemple, le délai critique est déterminé en fonction d'un algorithme prédéfini prenant en compte des valeurs de paramètres temporels du service critique de la deuxième infrastructure et des valeurs de paramètres caractéristiques du service défaillant de la première infrastructure.

Le message MIP est à transmettre lorsqu'il contient un nombre suffisant d'informations pertinentes pour que la deuxième infrastructure puisse réagir efficacement face à la défaillance détectée du service.

Le message MIP ne doit pas être transmis trop tôt, c'est-à-dire avant qu'il ne contienne ledit nombre suffisant d'informations pertinentes, afin de ne pas surcharger la deuxième infrastructure d'informations peu cohérentes et éviter à cette dernière de prendre des décisions inutiles. Par exemple, avant l'expiration du délai critique, le premier terminal client TC1 peut éventuellement informer le serveur de surveillance que le service défaillant a été réparé, ou que ce dernier sera réparé dans un délai donné.

Par ailleurs, le message MIP ne doit pas être transmis trop tard, c'est-à-dire au-delà d'un instant après lequel la deuxième infrastructure n'a plus le temps de réagir efficacement pour que la défaillance du service n'ait pas de conséquences néfastes sur le fonctionnement d'un service critique.

A titre d'exemple, les première et deuxième infrastructures critiques sont respectivement un réseau d'électricité et un réseau de télécommunication. Ce dernier délivre un service critique au moyen d'un routeur dont l'alimentation est assurée par une ligne électrique du réseau d'électricité qui fournit un service spécifique d'alimentation en électricité sur cette ligne. Le routeur contient une batterie qui a une durée égale à « deux heures », cette durée étant mémorisée en tant que paramètre temporel du service critique dans la base de données de règles BDR. Si la défaillance est une coupure d'électricité et si un paramètre temporel du service défaillant relatif à l'estimation de la réparation de la coupure a une valeur égale à « trois heures », le message MIP peut être transmis dès que cette valeur est reçue par le serveur de surveillance. Si cette valeur est égale à « une heure », le message MIP n'est pas transmis, puisque la défaillance n'aura pas de conséquence critique sur le fonctionnement du routeur.

Lorsque le module ORD donne l'autorisation de transmission au module GEN, ce dernier transmet le message intelligent de protection MIP au module d'affichage AFF2 de la deuxième infrastructure IC2. Par ailleurs, le module GEN transmet aussi le message MIP au module d'historique LOG pour que ce dernier mémorise le message MIP dans la base de données de stockage BDS.

A l'étape E10, le module d'affichage AFF2 reçoit le message intelligent de protection MIP et transforme ce dernier dans un format interprétable par la plateforme de gestion de réseau PGR2 de la deuxième infrastructure.

Les informations contenues dans le message MIP permettent à l'opérateur de la deuxième infrastructure de réagir au mieux face à la défaillance détectée du service de la première infrastructure. Ces informations sont des informations pertinentes sur l'état de fonctionnement réel du service défaillant. Par exemple, le message MIP contient un nombre minimal d'informations nécessaires pour prendre des contre-mesures adéquates afin que la défaillance détectée du service de la première infrastructure n'affecte pas le fonctionnement des services critiques de la deuxième infrastructure.

Par exemple, si les première et deuxième infrastructures sont respectivement un réseau d'électricité et un réseau de transport, le message MIP peut contenir des informations notamment sur une baisse progressive de tension observée sur une ligne à haute tension, indiquant que la tension sera en-deçà d'un seuil prédéfini dans un intervalle de temps déterminé, le seuil prédéfini correspondant à une tension minimale pour alimenter en électricité une partie du réseau de transport. Le message MIP avertit ainsi le réseau de transport de cette défaillance observée avec des informations pertinentes.

Selon un autre exemple, le message MIP peut ne pas contenir toutes les informations nécessaires à la deuxième infrastructure pour réagir face à la défaillance détectée, certaines informations étant encore indisponibles par exemple puisque certaines valeurs n'ont pu être obtenues pour renseigner certains paramètres. Dans ce cas, le message MIP peut contenir en outre une information indiquant qu'un paramètre est indisponible et sera renseigné dans un intervalle de temps donné. Ce message MIP, bien qu'incomplet, alerte la deuxième infrastructure d'une défaillance détectée avec certaines informations pertinentes, la deuxième infrastructure pouvant déjà lancer des contre-mesures en attendant de recevoir les informations pertinentes restantes.

Les étapes E2 à E10 sont répétées cycliquement et de manière régulée par le module d'ordonnancement temporel ORD tant que la défaillance détectée d'un service n'est pas complètement résolue ou considérée comme résolue.

Par exemple, si un message intelligent de protection MIP est reçu incomplet par la deuxième infrastructure, cette dernière reçoit au moins un autre message MIP contenant des informations pertinentes attendues. Dans ce cas, le serveur de service SS récupère des valeurs d'autres paramètres caractéristiques du service défaillant, applique les règles de corrélation aux valeurs récupérées pour produire d'autres informations relatives à l'état du service défaillant, et transmet un autre message contenant les informations produites au deuxième terminal TC2 de la deuxième infrastructure IC2.

Lors du traitement d'une défaillance dans une infrastructure critique, chaque message intelligent de protection MIP est mémorisé dans la base de données de stockage BDS afin d'actualiser les règles de corrélation par retour d'expérience, et de constituer un dossier d'historique pour un éventuel litige entre les opérateurs des infrastructures critiques interdépendantes.

A titre d'exemple non limitatif, on considère deux infrastructures interdépendantes qui sont un réseau électrique et un réseau de télécommunication.

Le réseau de télécommunication délivre un service critique qui est un service de facturation, une panne de ce service pouvant avoir des conséquences économiques dramatiques pour l'opérateur du réseau de télécommunication.

Les différents équipements du réseau de télécommunication assurant le fonctionnement du service de facturation sont alimentés en courant électrique par l'opérateur qui gère le réseau électrique. Le réseau électrique délivre donc un service d'alimentation en courant électrique dont dépend le fonctionnement du service de facturation.

Généralement, des mécanismes de protection, telle qu'une alimentation de secours, sont prévus pour ces équipements critiques en cas de coupure de courant. Cependant, en cas de coupure de courant prolongée, ces mécanismes peuvent ne pas être suffisamment dimensionnés pour couvrir la durée de la panne ou la puissance requise.

L'invention permet à l'opérateur du réseau de télécommunication d'avoir en temps réel des informations sur l'état du réseau électrique et, en cas de problème, des informations précises sur cet état et sur le retour à l'état normal, l'opérateur de télécommunication pouvant alors prendre des mesures de protection adéquates.

L'opérateur du réseau de télécommunication dispose de paramètres temporels relatifs au service critique, tels que la durée d'autonomie des différentes alimentations de secours, ou le délai nécessaire pour rediriger éventuellement la facturation vers d'autres équipements situés à un autre endroit qui assurent le même service et qui continuent de fonctionner. L'opérateur du réseau de télécommunication dispose en outre de métriques et de seuils relatifs au service critique, tels les seuils en courant de fonctionnement des équipements assurant le service critique et les caractéristiques en alimentation de ces équipements.

Pour que l'opérateur du réseau de télécommunication puisse anticiper des procédures de secours suite à une panne, l'opérateur du réseau électrique peut transmettre au serveur de sécurité des valeurs de paramètres caractéristiques du service d'alimentation en courant électrique qui est défaillant. De telles valeurs concernent par exemple l'information que des seuils prédéfinis en tension sont atteints et un délai à l'expiration duquel la tension nécessaire au bon fonctionnement est susceptible d'être rétablie.

Dès qu'une panne survient, le serveur de sécurité peut ainsi fournir au réseau de télécommunication des messages contenant des informations relatives à l'état du service défaillant, telles que des délais actualisés de rétablissement du service d'alimentation défaillant. Un délai peut être la somme de différents délais d'interventions ou de réparations que l'opérateur de réseau électrique peut évaluer et renseigner en temps réel. Les messages sont en outre fournis au réseau de télécommunication en fonction de paramètres temporels relatifs au service critique, à un instant considéré le plus opportun pour prendre une décision adéquate face à la panne.

## Revendications

1. Procédé pour surveiller le fonctionnement de services d'une première infrastructure (IC1) dont dépend le fonctionnement de services critiques d'une deuxième infrastructure (IC2), **caractérisé en ce qu'**il comprend les étapes suivantes dans un serveur (SS) apte à communiquer avec chacune des infrastructures :
suite à la détection d'une défaillance d'un service de la première infrastructure (IC1) par un premier terminal (TC1) inclus dans la première infrastructure, une réception (E3) d'un identificateur (IdS) du service défaillant émis depuis le premier terminal,
une transmission (E5) d'une requête au premier terminal (TC1) afin de récupérer des valeurs de paramètres caractéristiques du service défaillant,
une application (E7) de règles de corrélation aux valeurs récupérées pour produire des informations relatives à l'état du service défaillant, et
une transmission (E9) d'un message (MIP) contenant les informations produites à un deuxième terminal (TC2) inclus dans la deuxième infrastructure (IC2).

2. Procédé conforme à la revendication 1, selon lequel le message (MIP) est transmis à un instant déterminé en fonction de valeurs de paramètres temporels d'un service critique de la deuxième infrastructure dépendant du service défaillant.

3. Procédé conforme à la revendication 2, selon lequel le message (MIP) est transmis à un instant déterminé en outre en fonction de valeurs de paramètres caractéristiques du service défaillant.

4. Procédé conforme à l'une des revendications 1 à 3, comprenant en outre une transmission (E7) d'un message d'alerte (MUA) au deuxième terminal (TC2) si une valeur de paramètre caractéristique est en dehors d'une plage de valeurs prédéterminée.

5. Procédé conforme à l'une des revendications 1 à 4, comprenant en outre :
une récupération de valeurs d'autres paramètres caractéristiques du service défaillant,
une application de règles de corrélation aux valeurs récupérées pour produire d'autres informations relatives à l'état du service défaillant, et
une transmission d'un autre message contenant les informations produites au deuxième terminal (TC2) inclus dans la deuxième infrastructure (IC2).

6. Procédé conforme à l'une des revendications 1 à 5, selon lequel le message (MIP) contient un délai pour récupérer des valeurs d'autres paramètres caractéristiques.

7. Procédé conforme à l'une des revendications 1 à 6, comprenant en outre :
une génération (E01) d'une matrice de dépendance entre des services critiques de la deuxième infrastructure (IC2) et des services de la première infrastructure (IC1),
une association (E02) de paramètres temporels à chacun desdits services critiques de la deuxième infrastructure,
une définition (E03) de paramètres caractéristiques de chaque service de la première infrastructure dont dépend un service critique de la deuxième infrastructure,
une définition (E04) de règles de corrélation pour combiner des valeurs de paramètres caractéristiques d'un service défaillant, et
une mémorisation (E05) de la matrice de dépendance, des paramètres temporels, des paramètres caractéristiques et des règles de corrélation dans une base de données (BDR) liée au serveur (SS).

8. Serveur (SS) pour surveiller le fonctionnement de services d'une première infrastructure (IC1) dont dépend le fonctionnement de services critiques d'une deuxième infrastructure (IC2), le serveur étant apte à communiquer avec chacune des infrastructures, **caractérisé en ce qu'**il comprend :
des moyens (SBAL) pour recevoir, suite à la détection d'une défaillance d'un service de la première infrastructure (IC1) par un premier terminal (TC1) inclus dans la première infrastructure, un identificateur (IdS) du service défaillant émis depuis le premier terminal,
des moyens (SCOL) pour transmettre une requête au premier terminal (TC1) afin de récupérer des valeurs de paramètres caractéristiques du service défaillant,
des moyens (COR) pour appliquer des règles de corrélation aux valeurs récupérées pour produire des informations relatives à l'état du service défaillant, et
des moyens (ORD) pour transmettre un message (MIP) contenant les informations produites à un deuxième terminal (TC2) inclus dans la deuxième infrastructure (IC2).
